# FASCICULE DE BREVET EUROPEEN

(11) **EP 2 000 700 B1**
(45) Date de publication et mention de la délivrance du brevet: **09.12.2009**
(21) Numéro de dépôt: 08157680.3
(22) Date de dépôt: 05.06.2008
(51) Int. Cl.: F16F 15/133

(54) **Double volant amortisseur comportant un moyen de blocage du primaire**
Zweimassenschwungrad mit einer Blockiervorrichtung der Primärmasse
Two mass flywheel comprising means for blocking the primary mass

(30) Priorité: 06.06.2007 FR 0755519
(43) Date de publication de la demande: 10.12.2008
(73) Titulaire: Valeo Embrayages, 80009 Amiens (FR)
(72) Inventeur: Dequesnes, Laurent, 80800, FOUILLOY (FR); Jamot, Fabrice, 80700, CARREPUIS (FR)

(56) Documents cités:
- DE-U1-202004 014 344
- FR-A- 2 885 194
- GB-A- 329 084
- US-A- 4 895 016

## Description

L'invention concerne un double volant amortisseur notamment pour moteur de véhicule automobile.

Ce double volant amortisseur comprend un premier volant d'inertie, dit volant primaire, entraîné en rotation par l'arbre de sortie du moteur à combustion interne du véhicule ou vilebrequin, un deuxième volant d'inertie, dit volant secondaire, qui est porté et centré sur le premier volant d'inertie au moyen d'un palier et qui est relié par un embrayage à un arbre d'entrée d'une transmission, par exemple à un arbre d'entrée d'une boîte de vitesses, et un amortisseur monté entre les deux volants, pour la transmission d'un couple de rotation entre les volants, cet amortisseur comprenant des ressorts d'absorption des vibrations de rotation et des moyens de dissipation d'énergie par frottement qui freinent les oscillations relatives des volants.

Les ressorts d'absorption peuvent être par exemple des ressorts hélicoïdaux disposés de façon circonférentielle dans des chambres annulaires formées dans l'un des volants et remplies d'un agent de lubrification.

C'est le cas dans la demande de brevet français FR 2885194 qui montre un exemple de double volant amortisseur ayant des ressorts hélicoïdaux circonférentiels.

Pour effectuer des réglages du moteur, il est nécessaire d'immobiliser l'arbre de sortie du moteur à combustion ou vilebrequin, ce qui revient à immobiliser le double volant amortisseur qui est solidaire du vilebrequin, par l'intermédiaire du volant primaire.

Dans l'art antérieur, une tige vient se loger dans une plaque percée, fixée sur le volant primaire par des rivets extrudés, et permet d'immobiliser le volant primaire et donc le vilebrequin. Ces tiges sont généralement des cylindres de 8 millimètres.

En effet, la plaque percée bloque, par butée entre ses deux parois radiales, la tige dans le volant primaire, cette tige empêchant alors le mouvement de rotation du volant.

A l'opposé diamétralement de cette plaque percée, une plaque de contrepoids est disposée sur le volant primaire, sa forme étant adaptée à la forme de la plaque percée afin d'éviter le balourd. En effet, l'ajout la plaque percée sur le volant primaire, du fait de son poids, entraîne un balourd ou déséquilibre du centre de gravité du volant primaire, autrement dit le centre de gravité n'est plus situé sur l'axe de rotation du volant primaire.

Néanmoins, cette solution de l'art antérieur pour immobiliser en rotation le vilebrequin présente des inconvénients.

Elle implique la disposition de rivets sur le volant primaire, et augmente l'encombrement spatial de ce dernier. De plus, elle entraîne un coût supplémentaire dû à la fabrication des deux plaques et au temps supplémentaire passé pour l'assemblage de celles-ci sur le primaire.

Par ailleurs, lors de l'assemblage du moteur, le fabricant peut oublier d'installer la plaque percée et/ou la plaque de contrepoids sur le volant primaire.

La présente invention se propose de résoudre les problèmes de l'état de l'art à l'aide d'un double volant amortisseur en particulier pour véhicule automobile, comportant un volant d'inertie primaire, un amortisseur de torsion et un volant d'inertie secondaire formant trois sous-ensembles coaxiaux, le volant primaire comprenant une tôle annulaire rigide surélevée sur sa périphérie par deux chambres annulaires séparées par deux évidements, ces chambres annulaires logeant des ressorts circonférentiels, un moyen de blocage comportant deux parois radiales et adapté à recevoir une tige entre ces deux parois radiales pour immobiliser en rotation le volant primaire, le moyen de blocage se situant dans le premier évidement entre les extrémités des deux chambres annulaires, caractérisé en ce que chacune des deux parois radiales est constituée par une déformation de la tôle annulaire rigide.

Les deux parois radiales du moyen de blocage sont constituées par deux plis radiaux, chaque pli correspondant à une déformation de la tôle annulaire rigide.

La distance entre les deux plis radiaux peut être adaptée au maintien d'une tige de diamètre ou d'épaisseur sensiblement égale à 8 mm.

Dans un premier mode de réalisation, les deux plis radiaux du moyen de blocage correspondent aux deux parois latérales d'un logement situé à l'intérieur de la base de la tôle.

Dans un deuxième mode de réalisation, les deux plis radiaux du moyen de blocage sont situés à la surface de la base de la tôle.

Dans un troisième mode de réalisation, les deux plis radiaux du moyen de blocage correspondent aux parois radiales extrémités des chambres annulaires.

Avantageusement, une zone de tôle déformée est située dans le deuxième évidement pour équilibrer le centre de gravité du volant primaire.

Le logement présente une forme ovoïde ou toute autre forme.

La présente invention est maintenant décrite à l'aide d'exemples uniquement illustratifs, et nullement limitatifs de la portée de la présente invention, et à partir des dessins suivants dans lesquels :
- la figure 1 représente un volant primaire d'un double volant amortisseur de l'état de l'art;
- la figure 2 représente un premier mode de réalisation selon l'invention du volant primaire du double volant amortisseur ;
- la figure 3 représente une vue de détail de la figure 2, en coupe selon l'axe X-X, d'un premier mode de réalisation selon l'invention du moyen de blocage de la tige dans le volant primaire situé dans un premier évidement;
- la figure 4 représente une vue de détail de la figure 2, en coupe selon l'axe Y-Y, du moyen de blocage de la tige dans le volant primaire;
- la figure 5 représente une vue de détail de la figure 2, de dessus, d'une zone de déformation de la tôle située dans un second évidement ;
- la figure 6 représente une vue, en coupe selon l'axe Y-Y, du second évidement et de la zone de déformation de la figure 5 ; et
- les figures 7 et 8 représentent deux vues en perspective de dessus, selon un angle différent, d'un deuxième mode de réalisation, selon l'invention, du moyen de blocage de la tige dans le volant primaire.

Dans toute la suite de la description, seul le volant primaire 1 avec sa face orientée vers le vilebrequin est représenté. L'amortisseur, le volant secondaire du double volant amortisseur, ainsi que le vilebrequin et l'arbre d'entrée associés sont connues en eux-mêmes et ne sont pas représentés.

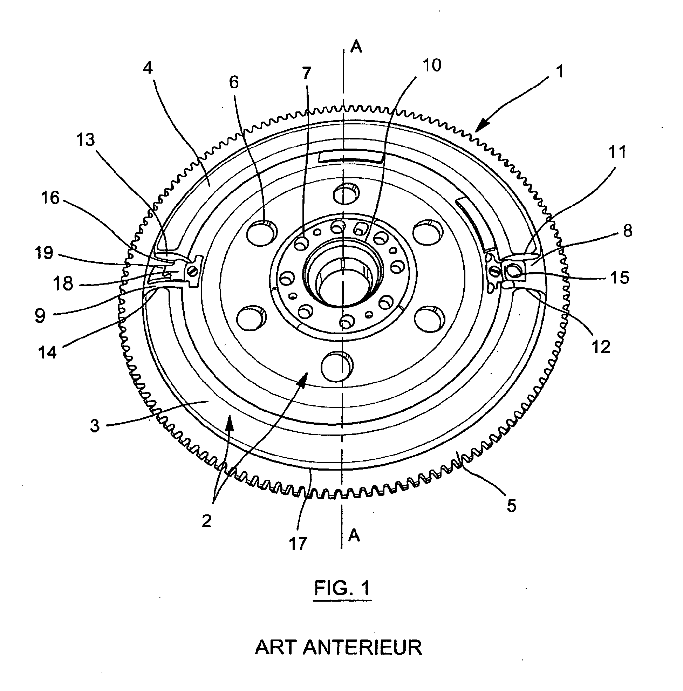

La figure 1 est une figure de l'état de l'art, et représente un volant primaire 1 d'un double volant amortisseur, apte à tourner dans un plan perpendiculairement à un axe de rotation A-A.

Le volant primaire 1 présente une tôle annulaire rigide 2 qui est surélevée à sa périphérie par deux chambres annulaires 3 et 4.

Cette tôle annulaire rigide 2 montre, du centre 10 vers son pourtour 17, deux séries concentriques de trous 6 et 7 répartis en cercles autour de l'axe de rotation A-A, deux évidements 8 et 9 situés au niveau des chambres annulaires 3 et 4, ces évidements 8 et 9 étant situés, chacun, entre deux parois radiales, respectivement 11, 12, et 13, 14 (ces parois radiales correspondant aux deux extrémités des deux chambres annulaires 3 et 4), et une couronne dentée 5.

Le volant primaire 1 est fixé au vilebrequin par des vis (non représentées), au niveau de sa surface représentée sur la figure 1, ces vis étant logées dans la première série 7 de trous. Il est fixé au volant secondaire par des vis logées dans la deuxième série 6 de trous.
Les deux chambres annulaires 3 et 4 ont pour fonction de loger des ressorts circonférentiels (non visibles sur cette figure 1 et sur les figures suivantes), ces ressorts permettant d'absorber les vibrations de rotation qui sont issues de la transmission du couple de rotation entre les volants primaire et secondaire.

Les deux chambres annulaires 3 et 4 sont remplies d'un agent de lubrification pour le fonctionnement des ressorts.

Entre ces chambres annulaires 3 et 4, les deux espaces ou évidements 8 et 9 situés entre leurs extrémités 11, 12, et 13, 14, permettent de disposer, pour le premier, une plaque percée 15, et pour le second, une plaque de contrepoids 16.

Dans le premier évidement 8, la plaque percée 15 est rivetée sur la tôle annulaire rigide 2 du volant primaire 1. Elle a pour fonction de recevoir et de bloquer une tige (par butée entre ses parois radiales), cette tige étant utilisée comme moyen d'immobilisation en rotation du volant primaire 1 et donc du vilebrequin solidaire de ce dernier.

Dans le second évidement 9, la plaque de contrepoids 16 permet d'éviter le balourd résultant de l'ajout de poids de la plaque percée 15.

Pour équilibrer le centre de gravité du volant primaire 1, la forme du contrepoids 16 est adaptée à celle de la plaque percée 15. En l'occurrence, sur la figure 1, elle présente une forme 18 en T et repose sur un méplat 19.

La périphérie extérieure du pourtour 17 du volant primaire 1 porte la couronne dentée 5 de démarreur ; cette couronne 5 ne sera pas représentée dans les figures qui suivent.

Le volant primaire 1 peut être constitué également d'une tôle annulaire flexible qui est serrée entre la tôle annulaire 2 et l'extrémité du vilebrequin.

Cette tôle annulaire flexible est fixée à la tôle annulaire rigide 2 à celle-ci par des rivets extrudés, cette variante de réalisation n'étant pas représentée sur les figures.

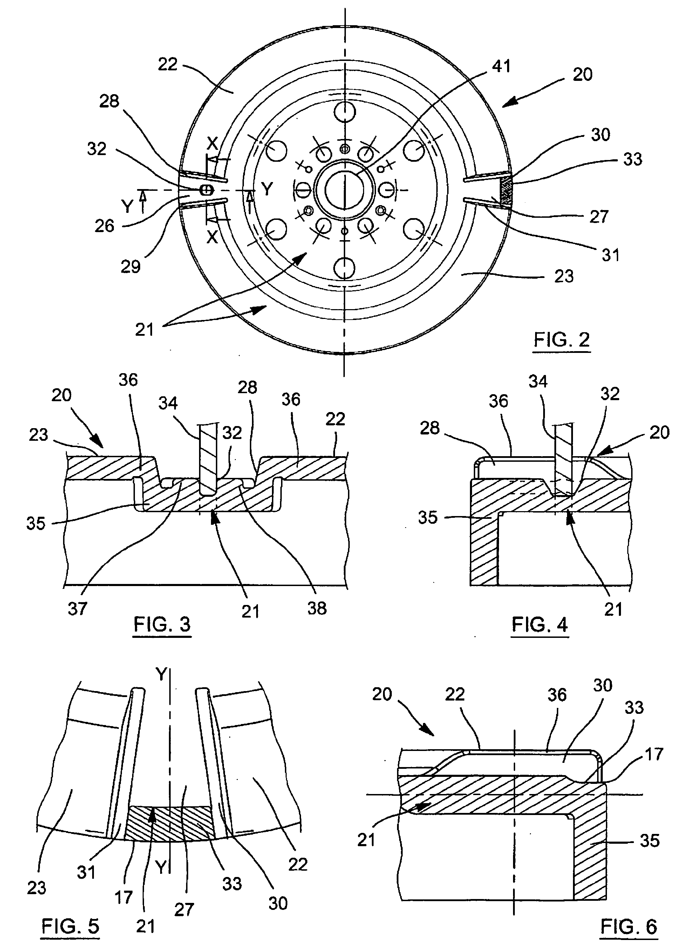

La figure 2 représente un premier mode de réalisation selon l'invention du volant primaire 20 du double volant amortisseur.

Le volant primaire 20 y présente la même structure que celle du volant primaire 1 de la figure 1. En l'occurrence, une tôle annulaire rigide 21 qui est surélevée à sa périphérie par deux chambres annulaires 22 et 23, deux séries concentriques de trous 24 et 25 répartis en cercles autour de l'axe de rotation, et deux évidements 26 et 27 situés, de façon symétrique par rapport au centre 41 du volant primaire 20, entre des parois radiales 28, 29, 30, 31 correspondant aux deux extrémités des deux chambres annulaires 22 et 23.

Dans le premier mode de réalisation selon l'invention, le moyen de blocage par butée de la tige dans le volant primaire pour immobiliser ce dernier en rotation est un logement ou cavité 32.

Ce logement 32 est situé dans le premier évidement 26 entre les deux parois radiales 28 et 29 extrémités des deux chambres annulaires 22 et 23. II peut être de toute forme, par exemple comme sur la figure 2, ovoïde, et est réalisé par poinçonnage-matriçage qui entraine un fluage de la tôle 21.

Dans le second évidement 27, une zone de déformation de tôle 33 représentée en traits hachurés est montrée.

Cette zone 33 a pour fonction d'équilibrer le centre de gravité du volant primaire 20, et ceci en raison de l'éventuel balourd suite à la réalisation du logement 32. En effet, la réalisation du logement 32 a modifié la distribution spatiale et éventuellement massique de la tôle 21, dans le premier évidement 26 (pour créer le volume que constitue le logement 32, une masse de tôle 21 peut avoir été enlevée).

Elle est obtenue à nouveau par poinçonnage-matriçage.

Il est à noter que cette zone de déformation 33 peut ne pas être réalisée. En particulier, si la réalisation du logement 32 ne déplace pas le centre de gravité du volant primaire 20 en dehors de l'axe de rotation A-A.

La figure 3 représente une vue de détail de la figure 2, en coupe selon l'axe X-X, du logement 32 ou moyen de blocage de la tige 34 dans le volant primaire 20, selon le premier mode de réalisation de l'invention.

Il est y montré une tôle annulaire rigide 21 qui présente au niveau de l'évidement 26 une forme sensiblement en U. Cette forme en U comporte une base 35 (branche horizontale du U) et deux élévations 36 (branches verticales du U) qui correspondent à l'épaisseur des parois circonférentielles des chambres annulaires 22 et 23.

Les deux élévations 36 se terminent, à leurs extrémités orientées vers le logement 32, par les deux parois radiales 28 et 29 qui présentent un angle aigu faible par rapport à la base 35 (ces parois 28 et 29 sont sensiblement verticales, c'est-à-dire perpendiculaires à la base 35).

A l'intérieur de la base 35 (dans l'épaisseur de la base 35), le logement 32 ou moyen de blocage de la tige 34 est réalisé par enfoncement de la tôle 21.

Le logement 32 présente une forme en U, les deux branches verticales du U correspondant à deux plis radiaux 37 et 38.

Ces plis radiaux 37 et 38 sont réalisés par fluage de la tôle 21. Ils correspondent donc à une déformation de la tôle 21.

Ils sont séparés selon la direction circonférentielle par une distance qui correspond, de façon préférentielle, sensiblement au diamètre ou épaisseur de la tige 34.

Ainsi, ces plis radiaux 37 et 38 sont les parois radiales du logement 32 qui sont destinés à enserrer la tige 34, c'est-à-dire, reçoivent et bloquent ou fixent cette dernière dans le volant primaire 20.

La tige 34 bloquée dans le volant primaire 20 permet alors d'immobiliser en rotation le vilebrequin, la tige 34 faisant office de butée en s'opposant et en empêchant le mouvement de rotation du volant 20 autour de l'axe A, et donc par extension le mouvement de rotation du vilebrequin, le vilebrequin étant solidaire du volant primaire 20.

La figure 4 représente une vue de détail de la figure 2, en coupe selon l'axe Y-Y, du logement 32 ou moyen de blocage (par butée) de la tige 34 dans le volant primaire 20 pour immobiliser ce dernier en rotation.

La base 35 de la tôle 21 dessinée en traits hachurés et une élévation 36 sont illustrées sur cette figure 4.

Le logement 32 qui présente une dimension selon l'axe Y-Y plus grande voire égale au diamètre de la tige 34. En revanche, la dimension selon l'axe X-X correspond sensiblement au diamètre de la tige 34, comme illustré figure 3, afin que le logement 32 constitue un moyen de blocage de la tige 32 dans le volant primaire 20, et ce pour que la tige 34 joue son rôle de moyen d'immobilisation du volant primaire 20 (et du vilebrequin).

La figure 5 représente une vue de détail de la figure 2, de dessus, de la zone de déformation 33 de la tôle 21 située dans le second évidement 27, ce second évidement 27 étant situé entre les deux parois radiales 30 et 31, extrémités des deux chambres annulaires 22 et 23.

La forme et la localisation de cette zone de déformation 33 sont réalisées afin que le centre de gravité du volant primaire 20 se situe sur l'axe de rotation A-A de ce dernier, ce qui évite, comme précédemment mentionné, tout déséquilibre ou balourd de ce dernier lors de la rotation.

Sur les figures 5 et 6, cette zone de déformation 33 se situe à l'extrémité circulaire du second évidement 27, sur le pourtour 17 du volant primaire 20.

De la même façon que sur la figure 4, la base 35 de la tôle 21, dessinée en traits hachurés, et une élévation 36 sont illustrées sur la figure 6.

Cette zone de déformation 33 peut être, par exemple, un aplatissement ou cassure de la base 35, comme montré sur la figure 6.

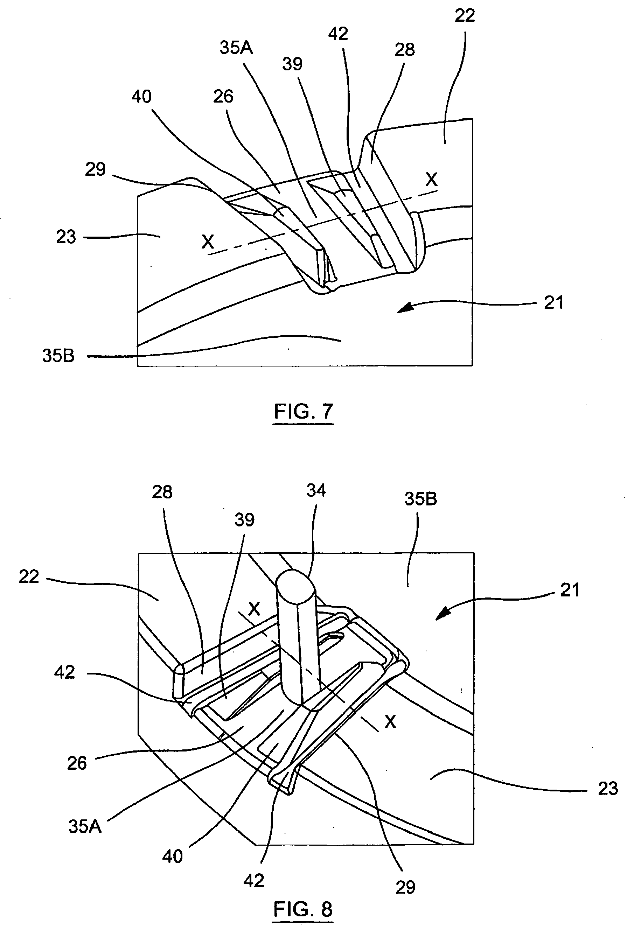

Les figures 7 et 8 représentent deux vues en perspective de dessus, avec un angle différent, d'un deuxième mode de réalisation selon l'invention du moyen de blocage par butée de la tige 34 dans le volant primaire 20 pour immobiliser ce dernier en rotation.

Le logement 32 de la figure 2 y est remplacé par deux plis radiaux 39 et 40 situés sur la surface de la base 35 de la tôle 21, ces deux plis 39 et 40 étant sensiblement symétriques (parallèles et de directions sensiblement radiales).

Dans ce second mode de réalisation de l'invention, comme ces deux plis radiaux 39 et 40 ont pour fonction d'enserrer ou de bloquer la tige 34 dans le volant primaire 20, la distance selon l'axe X-X qui les sépare est choisie, préférentiellement, de façon à être sensiblement égale au diamètre de la tige 34.

Ces deux plis 39 et 40 sont réalisés par fluage de la tôle 21, et correspondent comme pour le premier mode de réalisation de l'invention, à une déformation de la tôle 21.

La base 35A de la tôle 21 dans le premier évidement 26 se situe légèrement en-dessous la base 35B de la tôle annulaire 21 située en-dehors de ce premier évidement 26 vers le centre 41. La dénivellation entre ces bases 35A et 35B de la tôle 21 correspond au déplacement vertical de tôle 21, suite à son enfoncement, provoqué pour la réalisation des plis 39 et 40.

Des rainures 42 situées entre les plis radiaux 39 et 40 et les parois radiales 28, 29, 30, 31 des chambres annulaires 22 et 23 correspondent au déplacement de tôle 21, ce qui permet de rapprocher, de la verticale, les angles des plis 39 et 40 et des parois radiales 28 et 29 avec la base 35.

A ce second moyen de réalisation selon l'invention du moyen de blocage de la tige 34 dans le volant primaire 20, peut être associée, comme pour le premier mode de réalisation, la zone de déformation 33 située dans le second évidement 27.

Un troisième mode de réalisation, selon l'invention, est d'utiliser uniquement les parois radiales 28 et 29 des chambres annulaires 22 et 23 comme moyen de blocage par butée de la tige 34 dans le volant primaire 20, ce qui implique le resserrement des parois radiales 28 et 29, et donc la diminution de la distance entre les parois radiales 28 et 29 selon X-X jusqu'à obtenir, de façon préférentielle, une distance voisine ou égale à celle du diamètre de la tige 34.

Ces parois radiales 28 et 29 sont réalisées par fluage de la tôle 21, et à ce titre sont des plis radiaux 28 et 29, et correspondent comme pour le premier et le second mode de réalisation de l'invention, à une déformation de la tôle 21.

Il est également possible dans une variante de combiner ce troisième mode de réalisation avec le deuxième mode de réalisation de l'invention, et de ne réaliser qu'un seul pli radial, par exemple le pli radial 39, la tige 34 venant se loger entre ce pli radial 39 et la paroi radiale 28 extrémité de la chambre annulaire 22.

Toutes les variantes non décrites et qui utilisent la déformation de la tôle pour loger la tige dans le volant primaire sont possibles, l'essentiel étant qu'elles permettent de bloquer la tige dans le volant primaire entre deux parois radiales, la tige ayant pour fonction d'immobiliser en rotation le volant primaire et par la-même le vilebrequin.

## Revendications

1. Double volant amortisseur en particulier pour véhicule automobile, comportant un volant d'inertie primaire (20), un amortisseur de torsion et un volant d'inertie secondaire formant trois sous-ensembles coaxiaux, le volant primaire (20) comprenant une tôle annulaire rigide (21) surélevée sur sa périphérie par deux chambres annulaires (22, 23) séparées par deux évidements (26, 27), ces chambres annulaires (22,23) logeant des ressorts circonférentiels, un moyen de blocage comportant deux parois radiales et adapté à recevoir une tige (34) entre ces deux parois radiales pour immobiliser en rotation le volant primaire (20), le moyen de blocage se situant dans le premier évidement (26) entre les extrémités (28, 29) des deux chambres annulaires (22, 23), **caractérisé en ce que** chacune des deux parois radiales est constituée par une déformation de la tôle annulaire rigide (21).

2. Double volant amortisseur selon la revendication 1, **caractérisé en ce que** les deux parois radiales du moyen de blocage sont constituées par deux plis radiaux (28, 29, 37, 38, 39, 40).

3. Double volant amortisseur selon la revendication 2, **caractérisé en ce que** la distance entre les deux plis radiaux (28, 29, 37, 38, 39, 40) est adaptée au maintien d'une tige (34) de diamètre ou d'épaisseur sensiblement égale à 8 mm.

4. Double volant amortisseur selon l'une des revendications 2 à 3, **caractérisé en ce que** les deux plis radiaux du moyen de blocage correspondent aux deux parois latérales (37, 38) d'un logement (32) situé à l'intérieur de la base (35) de la tôle (21).

5. Double volant amortisseur selon l'une des revendications 2 à 3, **caractérisé en ce que** les deux plis radiaux (39,40) du moyen de blocage sont situés à la surface de la base (35) de la tôle (21).

6. Double volant amortisseur selon l'une des revendications 2 à 3, **caractérisé en ce que** les deux plis radiaux du moyen de blocage correspondent aux parois radiales (28, 29) extrémités des chambres annulaires (22, 23).

7. Double volant amortisseur selon la revendication 4, **caractérisé en ce que** le logement (32) présente une forme ovoïde.

8. Double volant amortisseur selon l'une des revendications 1 à 7, **caractérisé en ce qu'**une zone de tôle déformée (33) est située dans le deuxième évidement (27) pour équilibrer le centre de gravité du volant primaire (20).

## Claims

1. Double damping flywheel, in particular for a motor vehicle, comprising a primary inertia flywheel (20), a torsion damper and a secondary inertia flywheel forming three coaxial sub-assemblies, the primary flywheel (20) comprising a rigid annular plate (21) which is raised on its periphery by two annular chambers (22, 23) which are separated by two recesses (26, 27), these annular chambers (22, 23) accommodating circumferential springs, a blocking means which comprises two radial walls, and is designed to receive a rod (34) between these two radial walls, in order to immobilise the primary flywheel (20) in rotation, the blocking means being situated in the first recess (26) between the ends (28, 29) of the two annular chambers (22, 23), **characterised in that** each of the two radial walls is constituted by a deformation of the rigid annular plate (21).

2. Double damping flywheel according to claim 1, **characterised in that** the two radial walls of the blocking means consist of two radial folds (28, 29, 37, 38, 39, 40).

3. Double damping flywheel according to claim 2, **characterised in that** the distance between the two radial folds (28, 29, 37, 38, 39, 40) is designed to retain a rod (34) with a diameter or thickness which is substantially equal to 8 mm.

4. Double damping flywheel according to one of claims 2 or 3, **characterised in that** the two radial folds of the blocking means correspond to the two lateral walls (37, 38) of a receptacle (32) which is situated in the interior of the base (35) of the plate (21).

5. Double damping flywheel according to one of claims 2 or 3, **characterised in that** the two radial folds (39, 40) of the blocking means are situated on the surface of the base (35) of the plate (21).

6. Double damping flywheel according to one of claims 2 or 3, **characterised in that** the two radial folds of the blocking means correspond to the end radial walls (28, 29) of the annular chambers (22, 23).

7. Double damping flywheel according to claim 4, **characterised in that** the receptacle (32) has an ovoid form.

8. Double damping flywheel according to one of claims 1 to 7, **characterised in that** an area of deformed plate (33) is situated in the second receptacle (27) in order to balance the centre of gravity of the primary flywheel (20).

## Patentansprüche

1. Doppeldämpfungsschwungrad, insbesondere für ein Kraftfahrzeug, umfassend ein Primärschwungrad (20), einen Torsionsdämpfer und ein Sekundärschwungrad, die drei koaxiale Untereinheiten bilden, wobei das Primärschwungrad (20) ein starres ringförmiges Blech (21) umfasst, welches an seinem Umfang durch zwei ringförmige Kammern (22, 23), die durch zwei Ausnehmungen (26, 27) voneinander getrennt sind, erhöht ist, wobei diese ringförmigen Kammern (22, 23) in Umfangsrichtung wirksame Federn aufnehmen, wobei ein Blockierungsmittel zwei radiale Wände aufweist und geeignet ist, zwischen diesen beiden radialen Wänden für eine Drehblockierung des Primärschwungrades (20) einen Stößel (34) aufzunehmen, wobei sich das Blockierungsmittel in der ersten Ausnehmung (26) zwischen den Endpunkten (28, 29) der beiden ringförmigen Kammern (22, 23) befindet, **dadurch gekennzeichnet, dass** jede der beiden radialen Wände durch eine Verformung des starren ringförmigen Blechs (21) gebildet ist.

2. Doppeldämpfungsschwungrad nach Anspruch 1, **dadurch gekennzeichnet, dass** die beiden radialen Wände des Blockierungsmittels durch zwei radiale Falten (28, 29, 37, 38, 39, 40) gebildet sind.

3. Doppeldämpfungsschwungrad nach Anspruch 2, **dadurch gekennzeichnet, dass** die Entfernung zwischen den beiden radialen Falten (28, 29, 37, 38, 39, 40) zur Aufnahme eines Stößels (34) mit einem Durchmesser oder einer Dicke von etwa 8 mm geeignet ist.

4. Doppeldämpfungsschwungrad nach einem der Ansprüche 2 oder 3, **dadurch gekennzeichnet, dass** die beiden radialen Falten des Blockierungsmittels zwei seitlichen Wänden (37, 38) einer Aufnahme (32) entsprechen, die im Inneren der Basis (35) des Blechs (21) angeordnet ist.

5. Doppeldämpfungsschwungrad nach einem der Ansprüche 2 oder 3, **dadurch gekennzeichnet, dass** die beiden radialen Falten (39, 40) des Blockierungsmittels an der Oberfläche der Basis (35) des Blechs (21) angeordnet sind.

6. Doppeldämpfungsschwungrad nach einem der Ansprüche 2 oder 3, **dadurch gekennzeichnet, dass** die beiden radialen Falten des Blockierungsmittels den radialen Wänden (28, 29) an den Endpunkten der ringförmigen Kammern (22, 23) entsprechen.

7. Doppeldämpfungsschwungrad nach Anspruch 4, **dadurch gekennzeichnet, dass** die Aufnahme (32) eiförmig ausgebildet ist.

8. Doppeldämpfungsschwungrad nach einem der Ansprüche 1 bis 7, **dadurch gekennzeichnet, dass** eine Verformungszone (33) des Blechs in der zweiten Ausnehmung (27) angeordnet ist, um den Schwerpunkt des Primärschwungrades (20) auszuwuchten.
